# EUROPEAN PATENT APPLICATION

(11) **EP 0 943 972 A1**
(43) Date of publication of application: **22.09.1999**
(21) Application number: 99200775.7
(22) Date of filing: 15.03.1999
(51) Int. Cl.: G05B 23/02

(54) **Method and apparatus for providing product technical support from a remote location**

(30) Priority: 16.03.1998 US 78763 P
(71) Applicant: Agfa Corporation, Ridgefield Park, NJ 07660-2199 (US)
(72) Inventor: Sciarra, Anthony J., N.Andover, MA 01845 (US); Bussard, Mark L., Windham, New Hampshire 03087 (US); Gem, Russell A., Topsfield, MA 01983 (US)
(74) Representative: Ramon, Charles Lucien

(57) **Abstract**

According to the present invention a method of providing technical support for an industrial unit installed at a customer site comprising the steps of, providing a first remote support terminal (500, 2000) at the customer site such that the first remote terminal is in communication with the industrial unit (10) and provides an operator interface to the industrial unit. A second remote terminal (1000), at a location remote from the customer site, is also provided and the second remote terminal and the first remote terminal are configured such that an operator of the second remote terminal can take control of the first remote terminal. Upon establishing a communication link (512) between the first remote terminal and the second remote terminal, an operator of the second remote terminal (1000) can take control of the first remote terminal (500, 2000) such that the second remote terminal provides an operator interface to the industrial unit (10).

In another aspect of the present invention an apparatus for providing technical support for an industrial unit (10) installed at a customer site comprises, a first remote support terminal (500, 2000) located at the customer site. The first remote terminal is in communication with the industrial unit (10) and provides an operator interface to the industrial unit (10). A second remote terminal (1000) located at a site remote from the customer site, is provided and the second remote terminal (1000) and the first remote terminal (500, 2000) are configured such that an operator of the second remote terminal (1000) can take control of the first remote terminal (500, 2000) The apparatus further include a communication link (512) between the first remote terminal and the second remote terminal so that an operator of the second remote terminal (1000) can take control of the first remote terminal (500, 2000) such that the second remote terminal provides an operator interface to the industrial unit (10).

## Description

### Field of the invention

The present invention relates to providing technical product support for a product installed at a customer site, and specifically, to a method and apparatus for providing technical product support for a complex industrial product or system, installed at a customer site, without requiring that a trained support specialist be present at the customer site.

### Background of the Invention

In installations of equipment installed at a customer site, and especially in installations of complex industrial equipment such as process machinery, printing presses, complex computer systems and or high end computer system peripherals, or the like, it is customary for the equipment supplier or manufacturer to maintain and service the equipment. It is also expected that the supplier or manufacturer provide technical product support to the customer as required. Moreover, such maintenance, technical product support and service may be required on a 24 hour per day basis and may well extend through the entire useful life of the installed equipment. In many instances the ability of the manufacturer or supplier to provide these support functions to the customer is a significant factor in selecting a supplier of the equipment to be purchased. Moreover, service contracts for maintaining installed equipment may represent a significant revenue source for the equipment manufacturer.

For some industrial products, an equipment manufacturer or supplier may be required to support hundreds or even thousands of installed units simultaneously. In addition, many different models or versions of the same unit may exist at various customer installation locations, with each different model or version having a different option configuration, software revision or mechanical or electrical configuration depending on the needs of the customer or the age of the installed equipment or device.

Heretofore, technical product support of the customer equipment or device has been provided using telephone communications between an operator of the installed equipment or device located at the customer site and a trained customer support specialist located at a customer support center. In addition to telephone technical support, regular and scheduled equipment maintenance and service visits have been made to the customer site by a trained support specialist. Such scheduled service visits are used to examine the installed equipment, to perform routine maintenance and upgrades to the equipment hardware and software, as required, and to take advantage of face to face communication with the customer to more clearly understand any problems or additional needs that the customer may have.

In addition to regular and scheduled technical support and maintenance procedures, calls are often initiated by the customer, e.g. when the customer equipment is not working properly or when an operator at the customer site needs assistance in operating the equipment in a new mode or under new conditions. In such cases the customer problem or question may be resolved by one or more telephone communications, however, if this is not the case, then an unscheduled visit to the customer site by a trained technical support specialist is usually required to resolve the problem or to further train the customer. Moreover, such unscheduled visits must be made on very short notice in order to keep the customers installed equipment operating in the appropriate manner. Accordingly, unscheduled visits have been expensive, due to the need for a short response time. Moreover, unscheduled visits often turn out not to be unnecessary since the trained technical support specialist may quickly diagnose the problem and recognize that the problem could have been solved by the customer had it been properly diagnosed previously.

It may also be the case that customer sites are located a significant distance from a suppliers main facility, such as in a distant city, another country or on another continent. Since response time to correct a customer problem is often critical, suppliers have heretofore been forced to establish regional support centers in centralized regional locations to provide technical support for a region. This allows faster response times to deal with a customer problem but forces the equipment supplier or manufacturer to staff each regional support center with one or more trained technical support specialists so that travel time to the customer site is within the limits expected by the customer. Such a support system also requires that technical support specialists in each of the various regions be trained for each new model introduced into the market and further that such training occur before or simultaneously with the introduction of the new model into the market.

It is therefore a general problem in the art that unscheduled visits to a customer site to repair or otherwise service equipment installed at that site are expensive and disruptive to the routine travel schedule of a technical support specialist. It is further a general problem in the art that problems are not diagnosed or misdiagnosed by a customer or user of the equipment or by a telephone support specialist talking to a customer or user of the equipment. It is a still further problem in the art that new or unusual uses of the installed equipment may require that a trained technical support specialist travel to the customer site to train or assist the customer in the new or unusual uses of the installed equipment. It is yet another problem in the art that equipment suppliers must quickly train regional technical support specialists as a result of the introduction of new equipment into the market.

More recently, advances in computer hardware and software have enabled trained service providers to carry a portable computer system to the customer site and connect the portable computer system to an interface of the installed equipment and to control the installed equipment with the portable computer. Such a technique allows the service provider to access diagnostic programs stored on the installed equipment or stored on the portable computer and to operate the installed equipment in modes not normally available to the customer. A service provider may thereby e.g. override a safety feature, e.g. a door or cover interlock, so that the installed equipment could be operated in view of the service provider or may in the case of an image recording system command the system to record one or more test images onto a recording medium. Such diagnostic and or special command sets stored on the installed equipment or on the portable computer connected to the installed equipment and which are not normally available to the customer or operator are used by the trained service provider to diagnose system problems, to perform routine tests, e.g. to test electronic circuits or to operate mechanical components, and may also be used to access information stored in memory components of the installed equipment, e.g. the software revision, date of installation and last service, repair history, hours of usage or the like.

It is also known to use a portable computer connected to the installed equipment to establish a high speed digital data communication link with a central computer system e.g. located at a regional or central service center and to transfer information between the portable computer and central computer. Such a computer link has been used to transfer data relating to the installed equipment to the central computer, e.g. service record and system upgrades and the like, and has been used to transfer data from the central computer to the installed equipment, e.g. for loading an updated revision of the system operating software or for adding new capabilities to the installed equipment.

More recently, advances in computer hardware and software as well as price reductions in such systems have enabled the use of high speed data communication links to be used for real time audio and video conferencing over public or private data lines, e.g. ISDN lines, wireless data links, satellite links or the like. Moreover, through recent advances in computer operating systems and other computer application programs it is know to provide high speed digital data communication links between computer systems remote from each other and for an operator of a computer at a first location to take control of a computer at a second location and to operate the second computer to perform a task or series of tasks as may be required.

### SUMMARY OF THE INVENTION

It is therefore a general object of the present invention to test and diagnose problems of an industrial unit installed at the customer site from a location remote from the customer site.

It is a further object of the present invention to provide a method and apparatus for establishing a communication link between a computer system located at the customer site and in communication with an industrial unit installed at the customer site and a support computer system located at a location remote from the customer site, e.g. at a service center, and to operate the industrial unit using the support computer.

It is a still further object of the present invention to provide a method and apparatus for establishing a live video conference between a user of the unit installed at the customer site and a technical support specialist using the support computer at a location remote from the customer site.

In order to solve the problems as set forth above in and further in accordance with the objects of the invention there is provided a method of providing technical support for an industrial unit installed at a customer site comprising the steps of, providing a first remote support terminal (500, 2000), at the customer site, such that the first remote terminal is in communication with the industrial unit (10) and provides an operator interface to the industrial unit. In addition, a second remote terminal (1000), at a location remote from the customer site is provided. The second remote terminal and the first remote terminal are each configured such that an operator of the second remote terminal can take control of the first remote terminal. According to the method, a communication link (512) between the first remote terminal and the second remote terminal is established and so that by operating the second remote terminal (1000) and taking control of the first remote terminal (500, 2000), the second remote terminal provides an operator interface to the industrial unit (10).

In the case that the first remote terminal (500, 2000) and the second remote terminal (1000) each include audio and video receiving, processing and transmitting devices, (520, 530, 555), as well as, a video camera (540, 1006) and a microphone (550) and a speaker (560) associated therewith, the method further comprising the step of, establishing a video conference between the first remote support terminal (500, 2000), located at the customer site and the second remote terminal (1000) located at the site remote from the customer site. In addition, an operator located at the customer site may record an image of particular mode of operation of the industrial unit (10) using the video camera (540) associated with the first remote terminal (500, 2000) and transmit the image from the first remote terminal (500, 2000) to the second remote terminal (1000) for display on a display device (690) associated with the second remote terminal (1000). The image may then be analyzed at the site remote from the customer site to diagnose a problem of the industrial unit (10) and recommending a corrective action for repairing the industrial unit (10) based on an analysis conducted at the site remote from the customer site.

Also according to the present invention there is provided an apparatus for providing technical support for an industrial unit (10) installed at a customer site comprising, a first remote support terminal (500, 2000) located at the customer site and in communication with the industrial unit (10) such that the first remote terminal provides an operator interface to the industrial unit (10). The apparatus also includes a second remote terminal (1000) located at a site remote from the customer site. The second remote terminal (1000) and the first remote terminal (500, 2000) are each configured such that an operator of the second remote terminal (1000) can take control of the first remote terminal (500, 2000). A communication link (512) between the first remote terminal and the second remote terminal is provided so that an operator of the second remote terminal (1000) can take control of the first remote terminal (500, 2000) such that the second remote terminal provides an operator interface to the industrial unit (10).

The apparatus further includes a video display device (690) associated with each of the remote terminals (500, 1000, 2000) as well as a graphic adapter card 530 associated with each of the first and the second remote terminals, (500, 2000, 1000) an audio card (520), a microphone (550) and a speaker (560) associated with each of the first and the second remote terminals, (500, 2000, 1000) and a first video camera (540) associated with the first remote terminal (500, 2000) for capturing a video image at the customer site and transmitting the video image over the communication link (512) to the second remote terminal (1000) for display on the video display (690) associated therewith. A second video camera (1006) may also be associated with the second remote terminal (1000) for capturing a video image at the location remote from the customer site, the video image being transmitting over the communication link (512) to the first remote terminal (500, 2000) for display on the video display (690) associated therewith.

The first remote terminal and second remote terminals (500, 2000 and 1000) may also be configured for sending and receiving a digital data file and apparatus may also include at least one diagnostic program or digital file for commanding an element of the industrial unit (10) to perform in a particular manner. In one particular embodiment of the present invention, the industrial unit (10) comprises a platesetter (15) for recording a digital plate image file onto a printing plate (18), a workstation (40) for preparing the digital image file for plate recording and a RIP (50) for receiving the digital image file from the workstation (40), rasterizing the digital image file for recording onto a printing plate and for sending the rasterized digital image file to the platesetter (15). In another embodiment of the present invention, the first remote terminal (2000) includes the workstation (40) incorporated therein and in a still further embodiment, the first remote terminal (2000) also includes the RIP (50) incorporated therein.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the invention.
Figure 1 depicts the system for providing technical product support and an industrial unit 10 according to the present invention;
Figure 2 depicts a schematic diagram of the controller 75 used for controlling the industrial unit 10 according to the present invention;
Figure 3 depicts a schematic diagram of the interconnection of the system for providing technical product support and an industrial unit 10 according to the present invention
Figure 4 depicts a schematic diagram of a remote support terminal (500, 200) according to the present invention; and,
Figure 5 depicts a second embodiment of the system for providing technical product support and an industrial unit 10 according to the present invention.
Figure 6 depicts a third embodiment of the system for providing technical product support and an industrial unit 10 according to the present invention.

### DETAILED DESCRIPTION OF THE INVENTION

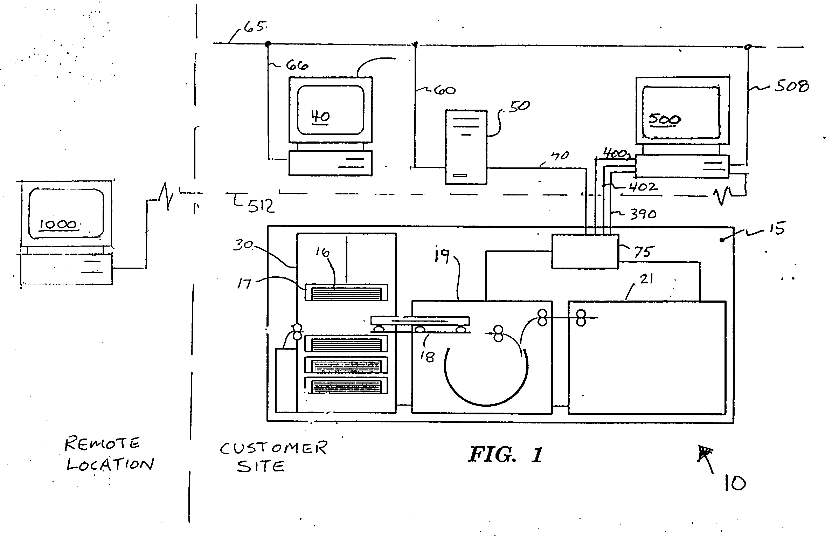

Referring now to Figure 1, an industrial unit shown in a typical customer site installation is generally referred to by reference numeral 10. In a first embodiment, the unit 10 comprises a printing plate recording system, having a platesetter generally referred to by reference numeral 15, an image editing workstation 40 and a raster image processor, hereinafter, RIP 50. In this case, the platesetter 15 includes a plurality of unexposed printing plates 16 contained in plate cassettes 17. A single printing plate 18 is transported from plate cassette 17 to an exposure unit 19 for exposure of an image thereon. The platesetter 15 further includes an electronics module 75 for operating the platesetter 15 and for communicating with other devices such as the RIP 50. The platesetter 15 may also include a plate processing unit 21 for further processing the printing plate after recording of the image thereon.

In typical operation, an operator working at the workstation 40 assembles, edits or otherwise manipulates image files to be recorded onto printing plates. Such image files once prepared at the image workstation 40 are communicated to the RIP 50 over a communication link 60. Communication link 60 may be directly connected the workstation 40, however, in a preferred embodiment of the present invention both the workstation 40 and the RIP 50 are connected to a local area network (LAN) 65, which is preferably operating according to the terminal connect protocol/Internet protocol or TCP/IP, but which may use other communication protocol commands to facilitate communication between devices attached thereto. In this case, the workstation 40 connects to the LAN 65 via communication link 66 and the RIP 50 connects to the LAN 65 via communication link 60 such that digital image files pass from the workstation 40 to the RIP 50 via the LAN 65.

The RIP 50 digitally processes the image files received from the workstation 40 thus converting the image files into a rasterized format convenient for recording the image file onto the printing plate 18 by the exposure unit 19. The rasterized or ripped images are then communicated to the platesetter electronic module 75, over a communication link 70. In the preferred embodiment of the present invention, the communication link 70 is a dedicated communication link, such as an RS232 serial link, operating according to a proprietary communication interface protocol. This configuration improves image transfer speed, allows the use of none-TCP/IP protocols and avoids transferring large data files, i.e. rasterized images files, across a LAN network which may slow down the network performance. However, it will be readily understood by one skilled in the art of the present invention that the platesetter electronic module 75 may also communicate with the RIP 50 or the workstation 40 via the LAN 65 or other non-proprietary communication link. The rasterized image data once received by the platesetter electronics module 75 is then used to modulate a radiation beam or exposing element (not shown) to linewise record an image onto the unexposed printing plate 18 installed in the exposure unit 19.

In operation, a plate handling device 30, the plate exposure unit 19 and the plate processor 21 are connected together in series such that printing plates are automatically passed from one to the next under the control of electronics module 75. A plurality of unrecorded printing plates 16 are stored in plate cassettes 17 held by the plate handler 30. Upon receiving an image file from the RIP 50, a single unrecorded printing plate 18 is selected from the plurality of unrecorded printing plates 16 stored in the plate handler 30 and transported to the plate exposure unit 19 where the image file received from the RIP 50 is linewise recorded onto the unexposed printing by exposing the plate with the radiation beam of an exposing device, (not shown). The exposed printing plate is then transported from the exposure unit 19 to the plate processing device 21 which further processes the image recorded on the exposed printing plate by chemical, mechanical or other processing means so as to permanently fix the recorded image onto the printing plate. Such a printing plate is then transported from the plate processor 21 and may be mounted onto a printing press to reproduce the image recorded on the printing plate using ink on paper or the like.

The printing plate recording system depicted in Fig. 1 is considered a relatively large and expensive piece of industrial equipment with high capital investment associated therewith and it will be appreciated that such a system would beneficially be operated with a minimum of down time, at substantially maximum printing plate throughput levels and in some cases for more than one working shift each day. Furthermore, it will be appreciated that the workstation 40 may be located in a different room with respect to the platesetter 15 and even in another building or at considerable distance therefrom, e.g. in another city, since it may be beneficial to assemble and edit images in a different location and to send the image files to the RIP 50 and the platesetter 15 which may be located near a printing press on which the printing plates produced by the platesetter 15 will be used to print the images. In such cases, several workstations 40 may be connected to the LAN 65 for sending digital plate image files to the platesetter 15 from remote locations. In such a case, the communication link 66 may be connected with a private or public dial-up communication system for connecting the workstation 40 with the RIP 50, or the workstation 40 may be connected with the RIP 50 via a semi-dedicated communications link, e.g. an ISDN line with ISDN modems at each end, or the like. In such an embodiment, the LAN 65 may comprise a Wide Area Network (WAN) such as the public access internet or worldwide web or a private WAN such as may be provided by a communication service provider.

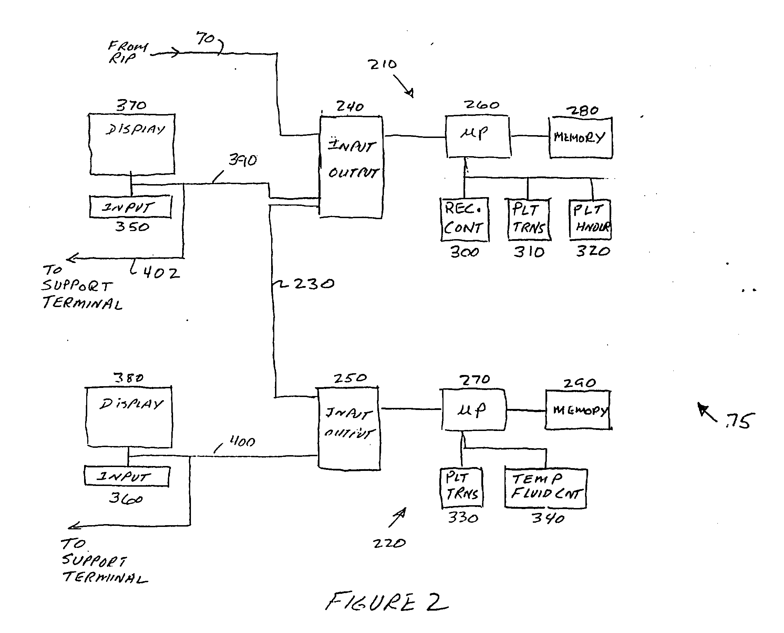

Referring now to Figure 2, the platesetter electronic module 75 is shown schematically to contain two separate control units 210 and 220. In the present embodiment, a first controller, referred to generally by reference numeral 210, controls the operation of the exposure unit 19 and the plate handler 30 and a second controller, referred to generally by reference numeral 220, controls the operation of the plate processor 21. Such an embodiment is convenient for the present invention since the plate processor 21 is manufactured by an Original Equipment Manufacturer (OEM) and is provided with a separate controller for controlling just the processor 21 as will be detailed below.

The first and second controllers 210 and 220 are connected together by a communication link 230. Each controller 210 and 220 includes an input output communication interface module 240 and 250, a microprocessor 260 and 270 and a memory module 280 and 290 respectively. In the case of controller 210 a number of other control system modules interface with the microprocessor 260 including an exposure unit controller 300, a plate transport controller 310 and a plate handler controller 320. In the case of the plate processor controller 220, it includes a plate transport controller 330, and a temperature and a fluid level controller 340 which are each-controlled by the microprocessor 270.

Thus each microprocessor 260 and 270 interfaces with and controls the operation of a number of controller sub-systems for receiving an image file from the RIP 50, for moving the printing plate from the plate handler 30 to the plate recording device 19, for recording the image onto a printing plate 18 and for transporting the exposed plate to the plate processor 21. The sub-controllers in turn control various electrical motors, sensors solenoids, elector-optical, pneumatic and other components, and the like, thereby operating the platesetter 15 in an automatic manner, in most cases, unattended by an operator. The operations of the various functions are in turn controlled by programs operating on the microprocessors 260 and 270 and which may be resident in the memory modules 280 and 290. In addition, other microprocessors or the like may also be included with the sub-controllers and may utilize data and or other programs stored on the memory modules 280 and 290 or other memory modules.

The controllers 210 and 220 may also each include an operator input device, keyboard or keypad 350 and 360 and a display device 370 and 380 for displaying text and or graphical data relating to system status such as operating mode, error messages or other information which may be required for general operation of the platesetter 15. In the case of the first controller 210, the input device 350 and display device 370 are used for providing an operator interface with the plate exposing device 19 and handler 30 and may be incorporated therein. Alternatively, a separate computer terminal, (not shown) may be connected to the first controller 210, via a communication link 390, for providing an appropriate user interface thereto. In either case, an operator or user interface program is provided to display various fields on the display device 370 and to allow an operator to select, using the input device 350, various operating parameters, e.g. recording resolution, positive or negative image polarity, type and or size of the printing plate desired, exposing power level and the like. In addition to communication link 390 there is provided a separate diagnostics communication link 402 connected with communication interface 240. The diagnostics interface 402 is specifically provided to allow the running of diagnostic programs by the controller 210. Such diagnostic programs may include commands for performing specific tasks by the platesetter 15, e.g. for loading or transporting a plate from the handler to the processor, for recording a test image onto a plate, for defeating safety interlocks by a trained service provider, or the like. Such diagnostics programs may be downloaded from a computer connected to the diagnostic interface 402 or may be stored in the memory 280. In addition, diagnostic interface 402 may also be used to access service specific information, e.g. a system serial number, a manufacture date, a software revision, or the like, or the diagnostic port may be used to access use history data such as number of plates recorded, prior error messages or the like.

In the case of the second controller 220 an input device 360 and display device 380 connect to the second controller 220 using a communication link 400 for providing a user interface to the plate processor 21, thereby allowing an operator to select various operating parameters, e.g. plate transport speed, developer temperature and flow rate, dryer temperature and the like. Similarly to controller 210, diagnostic programs may also be performed by the processor controller 220, however, according to the present invention the communication link 400 may be used both as a diagnostic port and as an operator interface control port. Although in the present embodiment of the electronic module 75 there are provided two distinct control systems, 210 and 220 and two distinct operator interface terminals, (370, 350, 380, 360), it will be readily apparent to those skilled in the art that a single controller may be provided to control both the plate recording and plate processing aspects of the present invention. In addition, although the controller 75 provides three separate communication links, (390, 400, 402) a single communication interface may be provided for communication with other devices remote from the plate imaging system 10. In either case, the commands passed between the controls 210 and 220 and the operator interface terminals (370, 350, 380, 360) are beneficially communicated by a standard communication protocol such as RS232 or the like so that the controllers 210 and 220 can readily communicate with other devices as will be detailed below.

Referring now to Figures 1, 3 and 4, the present invention provides a first remote support terminal, (RST), 500 in communication with the plate recording system 10 and located at the customer site, and a second remote support terminal (RST) 1000, located remotely from the first RST 500, and in communication with the first RST 500 via a communication link 512 between a communication port 510 on the RST 500 and a communication port 1002 on the RST 1000. The communication link 512 preferably comprises a dial-up link, e.g. ISDN modems 516 and 1004, or other high speed digital data telecommunication interface device, which may be incorporated into the RST 500 and RST 1000 respectively, or which may be separately provided. As will be appreciated by those skilled in the art of the present invention, the communication link 512 may be a dedicated communication link, a WAM network link, such as an internet connection provided through a internet connecting service provider or any other communication link, but preferably a high speed communication link.

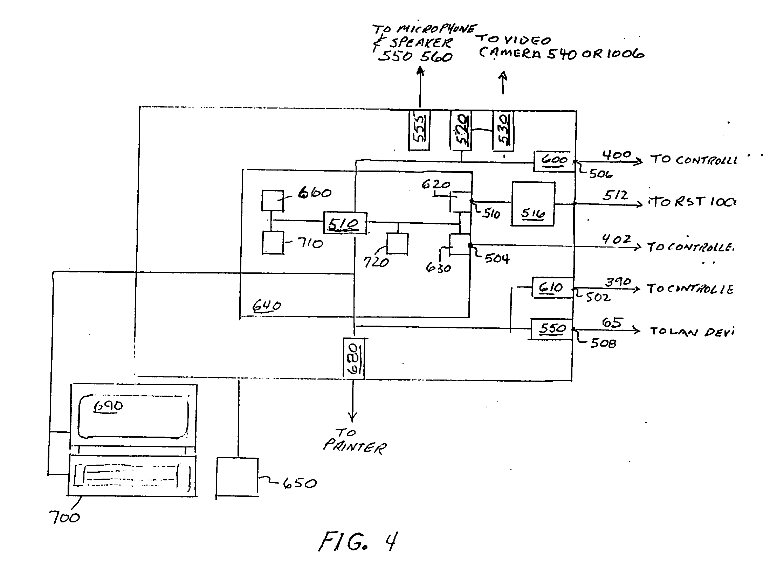

According to the present invention, the RST 500 and the RST 1000 each comprise a personal computer (PC), shown schematically in Figure 4, with each having a number of software programs stored and operating thereon and with each having a hardware configuration which is substantially similar as listed below. Each PC, RST 500 and RST 1000 is based on the Pentium socket 7 class personal computer design using an ADM K6 central processor unit, (CPU), 510. Each system operates using a PCI bus having an interrupt system which is limited to 16 interrupts. As such, each of the system components were selected and tested for operation in that mode. Also according to the present invention, the RST 500 and the RST 1000 each include a video display device 690, an input device, keyboard 700, a PS/2 mouse 650, a floppy disk and disk controller 660, a parallel communication port 680, which may be used for communicating with a local printer or other parallel communication device, an internal memory, such as random access memory, RAM 710, a hard disk or other digital data storage device and memory device controller 720 and other devices which may be commonly associated with a high performance personal computer system.

Also according to the present invention there is included the following software programs running on each of the RST 500 and the RST 1000. WINDOWS NT WORKSTATION, version 4.0, for providing an operating system for controlling the above described PC systems. NETMEETING, version 2.1, for enabling operators of the RST 500 and the RST 1000 to videoconference, audioconference and share applications and documents while discussing them in real time. Note that WINDOWS NT WORKSTATION and NETMEETING are both trademarks of MICROSOFT INC. In addition, the programs VIDEUM CAPTURE, VIDEUM CONFIGURE and VIDEUM LINK, each version 2.0.376, and each a trademark of WINNOV INC., are running on the RST 500 and the RST 1000 in order to provide remote control of a video camera, e.g. to allow remote zooming, panning and image capture using a video camera 540, located the customer site, by an operator of the RST 1000, located at the remote site. In addition, the WINNOV INC. software also supports real time audio and video conferencing. Also, the program PC DOCTOR, version 2.1B which is a trademark of SUPER MICRO INC is also installed on the RST 500 and the RST 1000 and used to diagnose various computer systems associated with the industrial unit 10 which may include the workstation 40, the RIP 50, the controllers 210 and 220 and either of the RST units 500 and 1000.

Accordingly, using the software and hardware described above, a service provider operating the RST 1000 at a location remote from a customer site in which the plate making unit 10 is installed can assume control of the RST 500 when the two systems are in communication and can initiate and or participate in an audio or video conference with a customer or another service provider located at the customer site. Moreover, the operator of the RST 1000 can assume full control of the platesetter 15.

According to the present invention the RST 500, shown schematically in Fig. 4, includes five communication ports. Two serial communication ports are provided by way of serial port expansion cards 600 and 610 and two additional serial communication ports 620 and 630 are provided on the mother board 640. Communication ports 502, 504 and 506, communicate with the electronics module 75 of the platesetter 15. Communication port 508 communicates with the workstation 40 either directly or via the LAN 65 and is configured for operation using the TCP/IP protocol. Communication port 510 communicates with RST 1000, as described above, and may use a network protocol such as TCP/IP or may utilize a serial, parallel or other communication link configuration but preferably communicates via a very fast communication link, e.g. via a semi-dedicated ISDN line. In addition, the RST 500 is connected with the electronics module 75 via three serial, bi-directional, communication links using an RS232 serial communication protocol. Communication link 390 connects communication port 502, of the RST 500, with the exposure and handler device controller 210 thereby providing an operator interface capability to operate the exposure device 19 and the handler device 30 using the RST 500 or the RST 1000 since, as detailed above, the RST 1000 can be used to operate the RST 500 remotely. Additionally, the exposure device 19 and the handler device 30 may still be operated from the workstation 40. Likewise, communication link 402 connects communication port 504 with a serial diagnostic port 402 provided on exposure and handler controller 210. This allows an operator of the RST 500 or the operator of the RST 1000 to perform diagnostic programs for assessing the performance characteristics of the exposure and handler devices 19 and 30. The link 402 may also be used to download diagnostic programs from the RST 500 or the RST 1000 to the controller 210 for operation thereby. A third communication link 400 is provided between the communication port 506, of RST 500, and the plate processor controller 220 thereby providing an operator interface capability to operate the plate processor device 21 using the RST 500 or the RST 1000 or the workstation 40. The link 400 may also be used to perform or download diagnostic programs for assessing the performance characteristics of the plate processor 21. In this manner, the RST 500 is specifically configured to take over the complete operation the platesetter 15 for operation by an operator of the RST 500 or to allow the platesetter 15 to be operated by an operator of the RST 1000 from a remote location.

The RST 500 further includes a 10/100 BT Ethernet network interface card 550, installed therein. The network interface card 550 connects to the LAN 65, via communication port 508. Port 508 is used for communicating with the workstation 40, the RIP 50 and or any other device connected to the LAN 65. All equipment connected to the LAN 65 is therefore in communication with the RST 500 and the RST 1000 for communication or data exchange therewith. Alternately, port 508 may communicate directly with the workstation 40 via communication link 66.

The RST 500 and the RST 1000 may further include a combination video capture audio card 520 as well as a 64 bit graphics adapter card 530 for interfacing with a video camera 540. The video camera 540 is connected to the RST 500 and operated by an operator located at the customer site to transmit video clips of the operating plate imaging system 10 to the substantially equivalently configured RST 1000 at a location remote from the customer site. A video camera 1006 connected with the RST 1000 may also be used to transmit video images from the remote location to the customer site so that a video conference may be established to allow interactive meetings between the two sites and or demonstrations to be transmitted from one site to another. The video camera 540 may also be used as a diagnostic tool by transmitting images of various operations performed by the platesetter 15, e.g. a video image of plates moving through the plate making system 10 may be viewed by a service provider located at the remote site using RST 1000. Still video images may also be used, e.g. to capture an image of an image recorded on the printing plate 18 so that the service provider operating the RST 1000 can view the recorded plate and discuss the results with the customer and or a local operator of the platesetter 15. Note that using the software listed above, the operator of RST 1000 is able to control the video camera 540 to zoom or pan an image. In addition, there may also be and audio microphone 550 and a speaker 560 associated with the RST 500 and the RST 1000 for transmitting audio communication over the communication link 512. The microphone 550 and the speaker 560 may be incorporated within the PC computer system (500 and 1000) or they may be incorporated with the video camera system 540 or they may comprise a headset and boom microphone worn by an operator and connected to a separate audio board 555 installed with the RST 500 and the RST 1000.

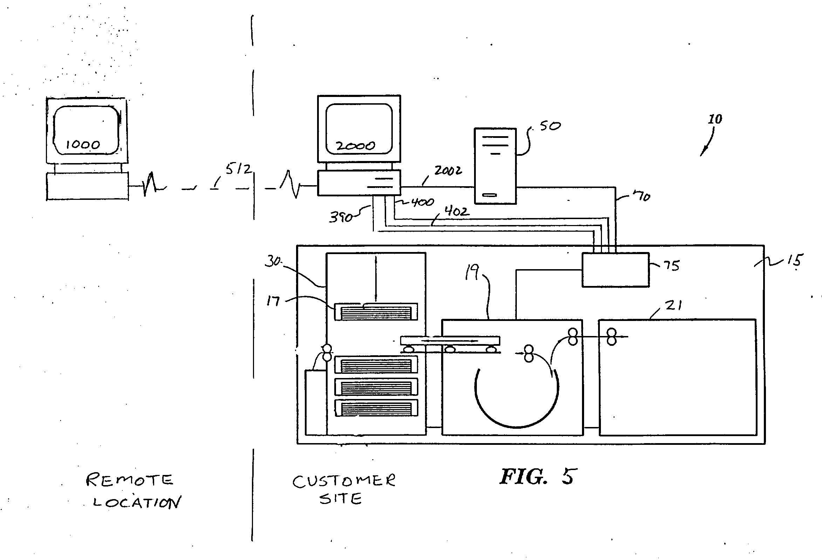

Referring now to Figure 5 there shown a second embodiment of the present invention. In this case, the workstation 40 and the RST 500 are combined so as to provide a single computer system 2000 located at the customer site. The system 2000 comprises the same hardware and software configurations as were described for the RST 500 and the RST 1000 above. In addition, the system 2000 further includes a number of image manipulation and processing programs operating thereon. Such programs are well known in the art and may include the capability for page image or graphics layout, text layout, color separation of images, font management, halftone screening, printing plate layout, color management and other features as may be required for preparing digital files for printing plate production.

The system 2000 is in communication with the platesetter 15 via the three communication links 390, 400 and 402 which interface with the platesetter controller board 75 as described above. The system 2000 and the RST 1000 are in communication via the communication link 512, also as described above. A communication link 2002 connects the system 2000 directly to the RIP 50, however, the system 2000 and the RIP 50 may also be connected to a LAN as was described above for the workstation 40. In all other aspects, the system 2000 can function either as the workstation 40 as described above or as the remote support terminal 500 as described above. The system 2000 thus provides layout and editing capability for producing printing plate image files, user interface control of the platesetter 15, user interface control of the RIP 50 and all of the capability described above of the RST 500 including providing video conferencing with live video and audio transmission to the RST 1000, remote operation of the system 2000 by the RST 1000 and communication with other devices connected to a LAN network such as LAN 65 detailed above.

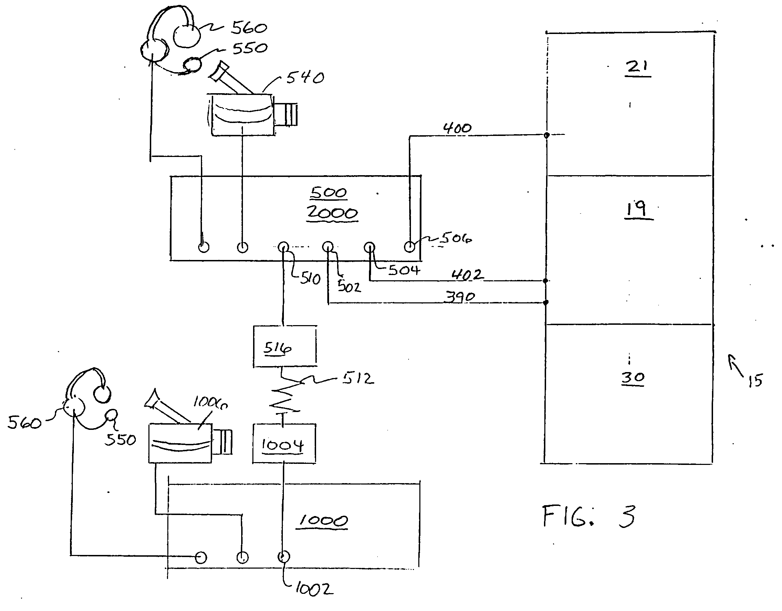

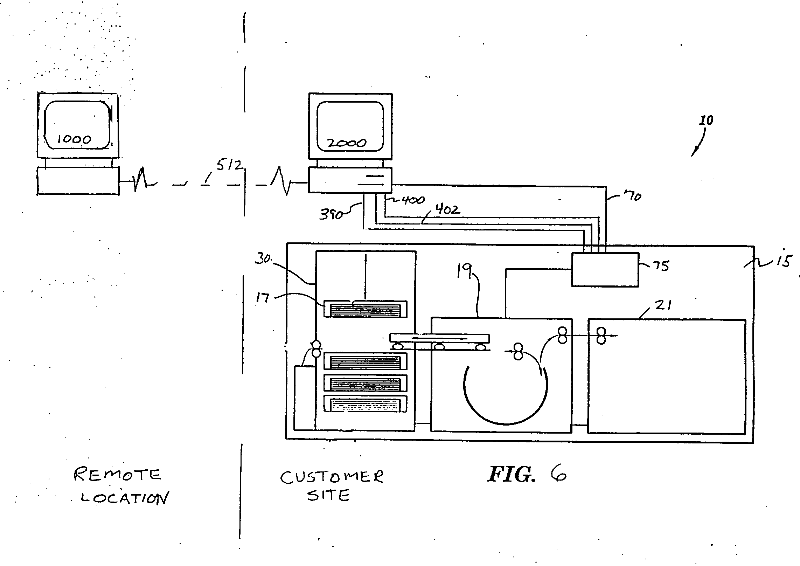

In another embodiment of the present invention shown in Figure 6, the RIP 50 may also be incorporated within the system 2000. Software programs for rasterizing images for printing plate production are known in the art and are capable of operating on a system such as system 2000. Such a software RIP program named TAIPAN is a available from AGFA-GEVAERT N. V. of Mortsel Belgium. In this case, the system 2000 includes the function of rasterizing printing plate digital files thereby eliminating the RIP 50 from the unit 10. The system 2000 therefore rasterizes a digital plate image and the communicates the plat image directly to the platesetter 15 via the communication link 70. It is also noted here that in the embodiments depicted in Figures 5 and 6, the system 2000 as well as the RST 1000 are each configured as shown in Figures 3 and 4.

In each of the embodiments, depicted in Figures 5 and 6, the system 2000 may be operated remotely via the communication link 512 by an operator operating the RST 1000. Moreover, the RST 1000 may also include software programs for preparing digital files for printing plate production as were described above as being loaded onto the system 2000. Accordingly, the system 1000 may be used to actually prepare digital printing plate image files remotely and transmit printing plate image files to the system 2000 for recording at the customer site by the platesetter 15. In this particular case, the printing plate image files are prepared by an operator of the RST 1000 and then transmitted from the RST 1000 to the system 2000 and rasterized either by the RIP 50 as depicted in Figure 5 of by a software RIP loaded onto the system 2000, according to the embodiment depicted in Figure 6.

Also according to the present invention, a software RIP may also be installed onto the RST 1000. In this case, rasterized digital printing plate image files may be transmitted from the RST 1000 to the system 2000 via the communication link 512. The rasterized printing plate image files may then be communicated directly to the platesetter 15 via the communication link 70 for image recording thereon.

By preparing and or storing digital printing plate image files at the remote site using the RST 1000, special printing plate files may be used to test or otherwise exercise the platesetter 15 in a desired manner. For example, standard printing plate image test files may be sent by the RST 1000 for recording by the platesetter 15. Printing plates prepared by the platesetter 15 according to the standard test files may then be used to evaluate the performance of the platesetter 15, either at the customer site or after shipment of the printing plates, prepared according to standard test files, to another site for more detailed evaluation and comparison with previously prepared printing plates recorded by the same or another platesetter 15. In a similar manner, the RIP 50 or a software RIP installed onto the system 2000 may also be tested by comparing the performance of a RIP installed at the customer site to a standard RIP installed at the remote site.

Thus according to the hardware and software system detailed herein, the present invention can be used to conduct a video conference between a customer site, where an industrial unit 10 is installed with the first RST 500 in communication therewith, and a remote site, in which the second RST 1000 is located, e.g. at a service center. The video conference may be conducted using video image capture devices 540 and 1006, a microphone 550 and a speaker 560, located at each site, and audio and video processing, receiving and transmitting hardware and software installed on each of the computer systems 500, 1000 or 2000, as detailed above in various embodiments of the present invention. In addition, the present invention may also be used to record and transmit live video still and or live video clip images with audio, including the feature of remotely panning and zooming the video camera 540 from the RST 1000 to allow an operator of the RST 1000 to view the operation of the platesetter 15, in real time, while the platesetter 15 is performing certain commands which may have been initiated by the operator of the RST 1000. The present invention may also be used to conduct a text chat session, download a white board or other digitized image and to share documents and applications between the RST 500 and the RST 1000 or in other embodiments, the system 2000 and the RST 1000. In addition, the present invention allows an operator to operate the exposure device 19 the plate handler 30 the plate processor 21 using the RST 500, the RST 1000 the system 2000 or the workstation 40 which may each provide a user interface for controlling all of the sub-system of the industrial unit 10. The present invention allows communication and data exchange between the RIP 50 and any other device connected to the LAN 65 with the RST 500, the RST 1000 or the workstation 40 or the system 2000. The present invention also allows remote preparation of image files, remote rasterizing of the image files and remote control of the imaging of the remotely prepared image files onto printing plates located at the customer site using the platesetter 15 by an operator of the RST 1000.

In one mode of operating the system according to the present invention, a customer or operator of the industrial unit 10 may initiate communication to an RST 1000 at a remote site by establishing a dial up connection using the ISDN modem 516 to link with the ISDN modem 1004 connected to the RST 1000. The operator of the industrial unit 10 may then request assistance form the operator of the RST 1000. The operator of the RST 1000 may then collect product information directly from the industrial unit 10 by taking over control of the RST 500 or the system 2000 and requesting that the platesetter 15 identify its configuration via the communication links 390, 400 and 402. The platesetter 15 may then communicate such information as a serial number or manufacture date, a software revision number or date, a configuration list, e.g. showing any special options, a status and or usage history, e.g. the number plates available or recorded or other such information and a list of any error conditions which may exist or have existed previously. The operator of the RST 1000 may also collect information about the workstation 40, the RIP 50 or the system 2000, also to determine revision numbers and error status or the like.

The operator of the RST 1000 and the operator of the industrial unit 10 may then conduct a live video conference, text chat or audio conversation via the communication link 512 to further discuss the reason for the evaluation of the industrial unit 10 and especially to identify the types of errors and the condition under which the errors occur. The operator of the RST 1000 may then initiate test sequences to exercise a particular portion of the industrial unit 10 and may also instruct the operator located at the customer site to record certain aspects of the performance of the industrial unit 10 using the video camera 540. The operator of the RST 1000 may view the images in real time and may transmit live audio instructions to the operator of the camera 540 to direct the operator of the camera 540 to view a particular aspect of the operation of the unit 10. The operator of the RST 1000 may also send a test image for recording by the platesetter 15 or the operator of the RST 1000 may use diagnostic software to diagnose hardware problems with any portion of the industrial unit 10, including the RST 500, the system 2000 or the RIP 50. Finally, the operator of the RST 1000 in cooperation with the operator of the industrial unit 10 may diagnose a problem with the unit 10 and make a recommendation for a repair or upgrade or the like. The repair or upgrade or the like may be performed by the customer or operator of the unit 10 or, the repair or upgrade or the like may be performed by the operator of the RST 1000 from the remote site, or a service call may be scheduled to send a trained repair specialist to the customer site. In this case, however, the repair specialist will be well informed as to the cause of the problem to be repaired and will be able to bring the needed equipment and or spare parts for making the repair to the customer site as required.

The foregoing description of the present invention has been presented for purposes of illustration and description. It is not intended to be exhaustive or to limit the invention to the precise form disclosed, and many modifications and variations are possible in light of the above teaching. Such modifications and variations that may be apparent to a person skilled in the art are intended to be included within the scope of this invention as defined by the accompanying claims. Specifically, the present invention has be described using a plate recording system by way of example. It will be apparent to a person skilled in the art that the teaching of the present invention may be applied to any industrial unit installed at a customer site which includes an electronic controller with an ability to communicate externally to another device. Moreover, the teachings of the present invention may also be applied to other types of electronic imaging systems including but not limited to recording images onto other types of photosensitive, thermal sensitive or other image recording materials as well as recording systems which employ inks and toners or the like to record an image onto a recording medium, including offset, gravure, lithographic and other types of printing presses.

## Claims

1. A method of providing technical support for an industrial unit installed at a customer site comprising the steps of:
a) providing a first remote support terminal (500, 2000) at the customer site, the first remote terminal being in communication with the industrial unit (10) such that the first remote terminal provides an operator interface to the industrial unit;
b) providing a second remote terminal (1000), at a location remote from the customer site, the second remote terminal and the first remote terminal being configured such that an operator of the second remote terminal can take control of the first remote terminal;
c) establishing a communication link (512) between the first remote terminal and the second remote terminal; and,
d) operating the second remote terminal (1000) to take control of the first remote terminal (500, 2000) such that the second remote terminal provides an operator interface to the industrial unit (10).

2. A method according to claim 1 wherein the first remote terminal (500, 2000) and the second remote terminal (1000) each include audio and video receiving, processing and transmitting devices, (520, 530, 555), as well as, a video camera (540, 1006) and a microphone (550) and a speaker (560) associated therewith, the method further comprising the step of:
a) establishing a video conference between the first remote support terminal (500, 2000), located at the customer site and the second remote terminal (1000) located at the site remote from the customer site.

3. A method according to claim 2 further comprising the steps of:
a) recording an image of particular mode of operation of the industrial unit (10) using the video camera (540) associated with the first remote terminal (500, 2000);
b) transmitting the image from the first remote terminal (500, 2000) to the second remote terminal (1000); and,
c) displaying the image on a display device (690) associated with the second remote terminal (1000).

4. A method according to claim 3 further comprising the step of:
a) analyzing the image displayed on the display device (690) to diagnose a problem of the industrial unit (10); and,
b) recommending a corrective action for repairing the industrial unit (10) based on an analysis conducted at the site remote from the customer site.

5. An apparatus for providing technical support for an industrial unit (10) installed at a customer site comprising:
a) a first remote support terminal (500, 2000) located at the customer site, the first remote terminal being in communication with the industrial unit (10) such that the first remote terminal provides an operator interface to the industrial unit (10);
b) a second remote terminal (1000) located at a site remote from the customer site, the second remote terminal (1000) and the first remote terminal (500, 2000) being configured such that an operator of the second remote terminal (1000) can take control of the first remote terminal (500, 2000);
c) a communication link (512) between the first remote terminal and the second remote terminal; and,
d) wherein an operator of the second remote terminal (1000) takes control of the first remote terminal (500, 2000) such that the second remote terminal provides an operator interface to the industrial unit (10).

6. The apparatus according to claim 5 wherein each of the first and the second remote terminals, (500, 2000, 1000) includes a video display device (690) associated therewith, the apparatus further comprising;
a) a graphic adapter card 530 associated with each of the first and the second remote terminals, (500, 2000, 1000);
b) an audio card (520), a microphone (550) and a speaker (560) associated with each of the first and the second remote terminals, (500, 2000, 1000); and,
c) a first video camera (540) associated with the first remote terminal (500, 2000) for capturing a video image at the customer site and transmitting the video image over the communication link (512) to the second remote terminal (1000) for display on the video display (690) associated therewith.

7. The apparatus according to claim 6 further comprising;
a) a second video camera (1006) associated with the second remote terminal (1000) for capturing a video image at the location remote from the customer site, the video image being transmitting over the communication link (512) to the first remote terminal (500, 2000) for display on the video display (690) associated therewith.

8. The apparatus according to claim 5 - 7 wherein each of the first remote terminal and second remote terminals (500, 2000) is configured for sending and receiving a digital data file and wherein the apparatus further comprises;
at least one diagnostic program for commanding an element of the industrial unit (10) to perform in a particular manner.

9. An apparatus according to claims 5 - 8 wherein the industrial unit (10) comprises:
a) a platesetter (15) for recording a digital plate image file onto a printing plate (18);
b) a workstation (40) for preparing the digital image file for plate recording; and,
c) a RIP (50) for receiving the digital image file from the workstation (40), rasterizing the digital image file for recording onto a printing plate and for sending the rasterized digital image file to the platesetter (15).

10. An apparatus according to claim 9 wherein the first remote terminal (2000) includes the workstation (40) incorporated therein.

11. An apparatus according to claim 10 wherein the first remote terminal (2000) includes the RIP (50) incorporated therein.
